# FASCICULE DE BREVET EUROPEEN

(11) **EP 0 922 565 B1**
(45) Date de publication et mention de la délivrance du brevet: **29.09.2004**
(21) Numéro de dépôt: 98402948.8
(22) Date de dépôt: 26.11.1998
(51) Int. Cl.: B32B 17/10, C03C 27/12, B60J 1/00, B32B 31/00

(54) **Vitrage feuilleté et son procédé de fabrication**
Schichtglas und Verfahren zu seiner Herstellung
Laminated glass and its fabrication process

(30) Priorité: 28.11.1997 FR 9715023
(43) Date de publication de la demande: 16.06.1999
(73) Titulaire: SAINT-GOBAIN GLASS FRANCE, 92400 Courbevoie (FR)
(72) Inventeur: de Paoli, Martial, 60400 Cuts (FR)
(74) Mandataire: Muller, René

(56) Documents cités:
- EP-A- 0 560 639
- FR-A- 2 612 174
- US-A- 4 704 174

## Description

La présente invention est relative à un vitrage feuilleté comportant au moins deux substrats rigides assemblés par un intercalaire comprenant au moins une feuille de matière thermoplastique, notamment à base de polyvinylbutyral (PVB).

L'invention sera plus particulièrement décrite pour une utilisation en tant que vitrage latéral coulissant dans la carrosserie d'un véhicule automobile mais elle n'est pas pour autant limitée à une telle application.

Les vitrages latéraux de véhicule automobile sont de manière usuelle, montés par coulissement dans la carrosserie du véhicule, généralement les portières. Le montage mobile nécessite la liaison du vitrage avec le mécanisme de levage, appelé mécanisme de montée-baisse.

On peut, de manière non limitative, classer les liaisons connues du type mentionné ci-dessus en deux catégories :
- d'une part, une première catégorie de liaison peut être identifiée à un assemblage vissé. Celui-ci nécessite le perçage d'un ou plusieurs trou(s) à travers le vitrage puis le serrage par vissage de deux parties solidaires du mécanisme de levage contre les deux faces du vitrage par l'intermédiaire d'une vis traversant le(s) trou(s).
- d'autre part, une deuxième catégorie de liaison, telle que celle décrite dans le document EP 0 694 669, peut être identifiée à un assemblage par pincement. Celui est réalisé par le rapprochement mutuel l'une vers l'autre de deux plaques en appui sur les faces externes des vitrages, ces plaques faisant partie en général de la même pièce en forme de U. Le rapprochement, quant à lui, est assuré par une ou plusieurs vis dont le serrage est effectué avec un couple important pour assurer une fixation efficace, tout particulièrement lors de la descente du vitrage dans la carrosserie. Ce couple important génère un effort de pincement des faces externes des vitrages très conséquent, d'au moins 120 daN. En outre, la valeur du couple est imposée par les constructeurs automobiles.

Il existe de la part de ces mêmes constructeurs automobiles une demande de plus en plus accrue pour améliorer les performances des vitrages latéraux plus particulièrement en termes d'isolation acoustique et de résistance mécanique, notamment de résistance aux effractions et, ceci, dans le respect des normes en vigueur, teiles que ia réglementation N°43.

Il est connu, par ailleurs, que les vitrages monolithiques ne fournissent qu'un affaiblissement des ondes acoustiques faible et que les propriétés de résistance mécanique des vitrages en verre sont considérablement augmentées lorsque ledit verre est trempé. Mais, dans le cas particulier des vitrages latéraux cette résistance mécanique ne doit pas être trop élevée car quand la fracture des vitrages devient souhaitable, par exemple en cas d'accident, elle empêche une fracture rapide et, par-là, une possibilité de sortie rapide pour les occupants du véhicule.

C'est pourquoi, pour réaliser un compromis satisfaisant entre les propriétés requises susmentionnées, il a déjà été proposé, par exemple dans les brevets EP 418 123 et EP 560 639, des vitrages feuilletés comportant deux substrats en verre et présentant un niveau de trempe différencié soit d'un substrat à l'autre, soit sur la surface d'un ou des deux substrats en verre, en particulier en rendant la contrainte de traction à coeur plus important dans la zone marginale du vitrage.

Pour fabriquer ces vitrages feuilletés, il est nécessaire soit d'utiliser comme intercalaire une feuille thermoplastique d'épaisseur relativement importante et/ou de formulation chimique complexe, soit d'utiliser de manière adéquate des dispositifs de bombage/trempe adaptés à la trempe différenciée précitée, dispositifs dont la mise au point peut être délicate. En d'autres termes, les coûts de fabrication de ces vitrages feuilletés peuvent être relativement importants.

Il s'est avéré qu'un vitrage feuilleté comportant deux substrats en verre peu trempé sur toute leur surface (c'est-à-dire tel que les contraintes de traction à coeur soient inférieures à 35 MN/m²), d'épaisseur inférieure ou égale à 2,1 mm et assemblés par un intercalaire « classique » comportant une feuille de polyvinylbutyral (PVB) était un parfait compromis entre les propriétés de résistance mécanique et d'isolation acoustique recherchées pour l'application visée, à savoir une utilisation en tant que vitrage latéral coulissant dans la portière d'un véhicule automobile et, ceci, dans le respect des normes telles que la réglementation N° 43, en particulier du point de vue de la ténacité à la fracture. Qui plus est, un tel vitrage est fabriqué aisément à l'aide de techniques de fabrication usuelles, ce qui est avantageux sur le plan industriel.

Il serait donc intéressant, pour une utilisation en tant que vitrage latéral pour véhicule automobile de pouvoir substituer ce dernier type de vitrage feuilleté aux vitrages trempés, éventuellement feuilletés, mentionnés plus haut.

Le problème qui découle alors de cette substitution est, bien évidemment, celui du montage du vitrage feuilleté envisagé.

Aussi, il serait notamment très intéressant, autant du point de vue pratique qu'économique, de pouvoir installer sans modification majeure ni du cadre du vitrage latéral, ni du mécanisme de manoeuvre de celui-ci, en particulier du mécanisme de liaison précédemment évoqué.

Ainsi il serait très utile de conserver les mécanismes de liaison usuels, ce qui permettrait, entre autre, d'avoir un montage indifférencié pour tous les vitrages latéraux de véhicule automobile déjà mentionnés.

Plusieurs types de solutions peuvent alors être envisagés.

Un premier type consiste à avoir recours à l'assemblage vissé mentionné en préambule. En outre, cela impose une étape de perçage. Cette étape peut s'effectuer avant ou une fois le feuilletage du vitrage réalisé par action conjuguée d'une différence de pression et de chaleur, par exemple dans un autoclave. Dans le premier cas de figure, elle engendre un problème de mise en concordance des trous. Dans le deuxième cas de figure, elle est d'une mise en oeuvre délicate du fait même de la faible épaisseur du vitrage feuilleté.

Un deuxième type de solution consiste à utiliser l'assemblage par pincement mentionné également en préambule, ledit pincement s'effectuant alors sur un des deux substrats en verre de dimensions supérieures à l'autre, tels que configurés dans le brevet EP 418123 précité. Cependant l'effort appliqué sur le substrat en verre peu trempé d'épaisseur inférieure ou égale à 2,1 mm par l'intermédiaire du couple de serrage fixé est trop important de sorte que ledit substrat casse.

Enfin selon un troisième type de solution, il est possible d'envisager que le pincement s'effectue sur le manchon d'une pièce en matière plastique rigide prolongée par une partie terminale en forme de U dont les branches adhèrent au vitrage feuilleté au moyen d'une colle. Mais outre le fait que cela impose une géométrie particulière de la pièce réalisant le pincement, il faut veiller à ce que d'une part la surface de colle ménagée soit suffisante et, d'autre part, à ce qu'il n'y ait pas d'affleurement de ladite pièce en matière plastique au niveau du joint appelé « lécneur de vitres » qui permet d'assurer l'étanchéité entre le vitrage et la portière du véhicule automobile.

Le but de l'invention est d'alors d'obvier aux inconvénients précités et de proposer un vitrage feuilleté aux propriétés d'isolation phonique et de résistance mécanique élevées sur l'ensemble de sa surface, apte à résister, dans sa partie marginale, à des efforts de compression localisés conduisant à sa casse, par exemple résultant d'un pincement, et, notamment utilisable en tant que vitrage latéral coulissant dans la carrosserie d'un véhicule automobile et assemblé par pincement avec le mécanisme de levage.

Un autre but de l'invention est de proposer un procédé de fabrication d'un tel vitrage qui soit de mise en oeuvre simple et peu coûteuse.

Pour ce faire, l'invention a pour objet un vitrage feuilleté comportant au moins deux substrats transparents rigides assemblés par un intercalaire comprenant au moins une feuille de matière thermoplastique, notamment à base de polyvinylbutyral (PVB), ledit intercalaire présentant, dans sa partie marginale, au moins une échancrure sur au moins une partie de son épaisseur (e). Selon l'invention, ledit vitrage comporte un insert dur logé dans ladite échancrure.

Dans le contexte de l'invention, il faut comprendre par « insert dur », une pièce résistante à la production d'une empreinte par pression d'un objet de nature différente, en l'occurrence au moins un des deux substrats, dans une gamme de températures telle qu'elle n'a pas de comportement viscoélastique.

Egalement dans le contexte de l'invention la dureté de l'insert selon l'invention est de toute manière supérieure à celle de l'intercalaire et inférieure à la dureté minimale des deux substrats rigides.

La solution selon l'invention a ceci d'extrêmement avantageux que, tout en répondant parfaitement au problème posé, elle permet un gain de place non négligeable par rapport aux solutions selon l'état de l'art car, par définition, elle n'apporte aucun encombrement supplémentaire. Ceci a pour conséquence directe, lorsqu'il est utilisé en tant que vitrage latéral de véhicule automobile, de pouvoir créer, en cas de besoin, une excroissance locale du vitrage dans sa partie marginale basse et, dans une moindre mesure, d'améliorer sa géométrie au niveau du système de pincement. De plus, on s'affranchit de tout problème de collage.

Selon une caractéristique de linvemion, l'intercalaire peut comprendre au moins une feuille à base d'autre(s) polymère(s) organique(s), notamment du polyuréthane et/ou de l'éthylévinylacétate (EVA) et/ou du chlorure de polyvinyle (PVC) et/ou un polyester du type polyéthylènetéréphtalate (PET) et/ou du polycarbonate et/ou du polypropylène et/ou du polyéthylène et/ou du polyuréthacrylate.

Selon une caractéristique avantageuse de l'invention, le vitrage est apte à supporter un effort par unité de surface d'au moins 2 MPa, appliqué de part et d'autre des faces externes desdits substrats dans la zone où est situé l'insert.

Selon cette même caractéristique de l'invention, la surface de l'insert dur est de préférence au moins égale à celle sur laquelle s'exerce ledit effort.

De préférence l'insert dur selon l'invention présente une dureté Shore D limitant le fluage à chaud de la feuille de matière thermoplastique dans la zone où est situé l'insert.

Par « chaud », il faut comprendre dans le cadre de l'invention, une température au-delà de celle où la feuille de matière thermoplastique de l'intercalaire commence à subir une déformation lorsqu'elle est soumise à un effort de compression permanent.

De préférence encore, dans le cas où les substrats sont en verre peu trempé sur toute leur surface, l'insert dur présente une dureté shore D comprise entre 70 et 90, avantageusement égale à 80.

Selon une autre caractéristique de l'invention, lorsque les substrats sont en verre, alors ils peuvent avoir une épaisseur comprise entre 1,5 et 2,1 mm.

Selon une variante de l'invention, l'insert dur est en matière plastique injectée, moulée ou usinée. Cette variante qui peut également consister en un insert en matière plastique chargée de fibres et/ou billes de verre, ce qui améliore sa résistance mécanique, est très avantageuse en ce sens qu'elle évite de créer localement des rayures dans le verre à la fabrication du vitrage feuilleté, rayures qui pourraient se révéler néfastes en particulier lors de l'assemblage avec le mécanisme de levage. Selon cette même variante, l'insert dur peut être en polyamide ou en polybutylène téréphtalate (PBT).

En fait, de manière générale, l'insert dur selon l'invention peut être en toute matière thermoplastique susceptible de convenir aux exigences de la résistance à l'écrasement induit par les efforts de compression localisés dans la partie marginale d'un vitrage conforme à l'invention.

En ce qui concerne les dimensions de l'insert dur selon l'invention, il a une épaisseur égale à au moins 85 % de celle (e) de l'intercalaire, de préférence comprise entre 0,65 et 0,76 mm. De préférence, la distance séparant le bord « libre » dudit insert du bord du substrat rigide assemblé qui en est le plus proche est inférieure à 1 mm.

Pour ce qui est de sa forme, ledit insert et ladite échancrure peuvent être de formes complémentaires, de préférence permettant l'emboîtement.

Comme précisé précédemment, le vitrage feuilleté selon l'invention constitue préférentiellement un vitrage pour véhicule automobile, tel qu'un vitrage latéral mobile dans la carrosserie ou un pare-brise. Dans cette dernière configuration, le vitrage est pincé d'un côté par la carrosserie du véhicule automobile, de l'autre côté par la grille de ventilation du capot moteur par les ouvertures de laquelle passent les axes de rotation des essuie-glaces.

L'invention concerne également le vitrage feuilleté ci-dessus décrit, dont les faces externes des substrats sont pincées de part et d'autre par au moins une pièce dans la zone où est situé l'insert dur, remarquable en ce qu'il est apte à supporter le champ de contraintes en compression induit par ladite pièce.

Avantageusement, la pièce est une pièce de liaison solidaire d'un mécanisme assurant la mobilité dudit vitrage, en particulier un mécanisme de montée baisse d'un vitrage latéral mobile dans une carrosserie de véhicule automobile. Selon une caractéristique additionnelle, cette pièce comporte une paire de plaques dont le rapprochement mutuel est assuré par au moins une vis de serrage.

De préférence, l'effort de pincement des faces externes des substrats exercé par la vis de serrage est d'au moins 120 daN.

L'invention concerne enfin un procédé de fabrication d'un vitrage feuilleté comportant deux substrats transparents rigides assemblés par un intercalaire qui comprend au moins une feuille de matière thermoplastique, notamment à base de polyvinylbutyral (PVB). Selon l'invention on réalise, en outre, les étapes suivantes :
a/on réalise dans la partie marginale dudit intercalaire au moins une échancrure sur au moins une partie de son épaisseur (e)
b/ on loge un insert dur dans ladite échancrure.

On peut réaliser l'étape b/ pendant ou après avoir empilé en les ajustant le(s) substrat(s) et la (les) feuilles(s) de matière thermoplastique.

On peut également réaliser l'étape b/ après avoir feuilleté le vitrage feuilleté de façon définitive par action d'une différence de pression et/ou de chaleur.

De même, on peut réaliser l'étape b/ en injectant une matière liquide mono ou bi-composante, de préférence polymérisable sans retrait.

D'autres détails et caractéristiques avantageuses ressortiront ci-après à la lecture d'un exemple de réalisation, non limitatif, du vitrage conforme à l'invention faite en référence aux figures qui représentent :
- **Figures 1a et 1b** : une vue de face et une vue en coupe transversale d'un vitrage selon l'invention ;
- **Figure 2** : une vue en coupe transversale d'un vitrage latéral coulissant dans la portière d'un véhicule automobile et assemblé par pincement avec le mécanisme de levage, selon l'état de l'art ;
- **Figure 3** : une vue en coupe transversale d'un vitrage latéral coulissant dans la portière d'un véhicule automobile et assemblé par pincement avec le mécanisme de levage, selon l'invention.

On précise tout d'abord que, par souci de clarté, toutes les figures ne sont pas représentées à l'échelle et ne respectent pas les proportions relatives entre les différents éléments.

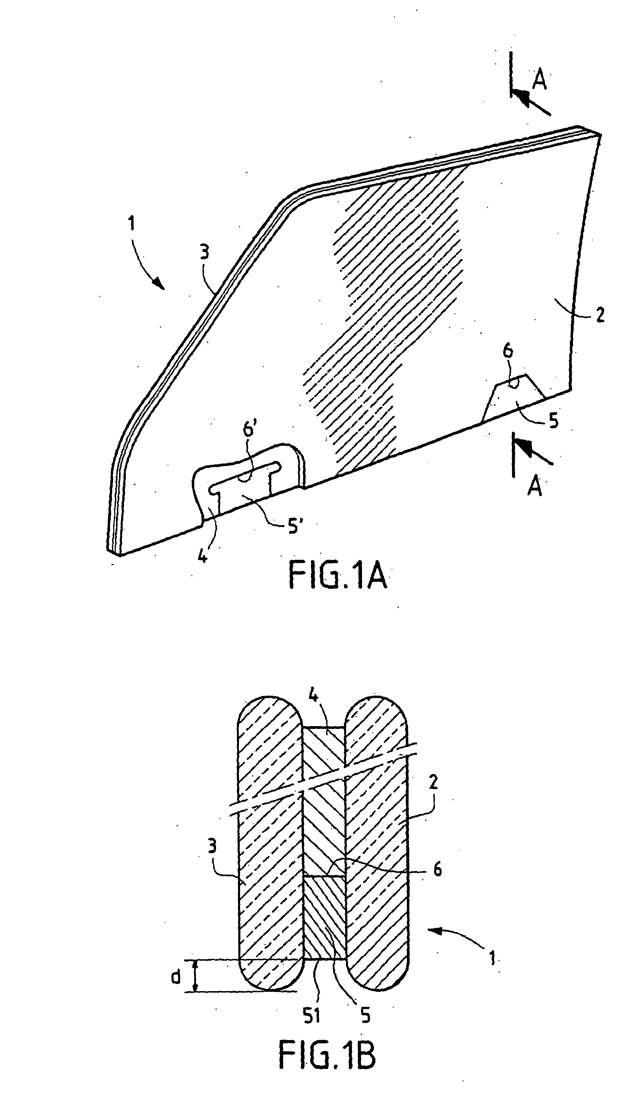

Sur la figure 1a, on a représenté un vitrage feuilleté 1, de dimensions 0,8 m x 1 m qui est un vitrage latéral de véhicule automobile constitué de deux substrats 2, 3 en verre peu trempé silico-sodo-calcique clair, d'épaisseur égale à 2,1 mm assemblés par une feuille 4 en polyvinylbutyral PVB, d'épaisseur (e) égale à 0,76 mm une fois le cycle de feuilletage par autoclavage effectué. Comme on le verra ci-après ce vitrage coulisse verticalement. En outre, il est bombé pour épouser la forme profilée de la carrosserie d'un véhicule automobile, même si cela n'apparaît pas clairement à la lecture des figures extrêmement schématiques.

Ce vitrage 1 comporte dans sa partie marginale inférieure deux inserts 5,5' en matière plastique qui est du polyamide 6,6 usiné. Chacun de ces inserts 5,5' présente une dureté shore D de l'ordre de 80 et une surface approximativement égale à 13,5 cm². L'épaisseur de ces inserts 5,5' est égale à 0,75 mm.

Sur la figure 1b, on voit en vue de coupe selon l'axe A-A la manière dont est agencé l'insert 5 dans le vitrage feuilleté 1. L'insert 5 est logé dans une échancrure 6 pratiquée dans la feuille 4 en PVB et de forme sensiblement complémentaire de telle sorte que la distance d séparant le bord « libre» 51 de l'insert 5 (c'est-à-dire le bord qui n'est pas en contact avec la feuille 4) du bord du substrat en verre 4 est inférieure à 1 mm.

Pour loger les inserts 5, 5' respectivement dans les échancrures 6, 6' on a procédé de la manière suivante :
- on a pratiqué une échancrure 6 de section trapézoïdale et une échancrure 6' en forme de T sur toute l'épaisseur (e) de la feuille 4 au moyen d'une lame de découpe,
- on a empilé en les ajustant les substrats 2,3 et la feuille 4 en PVB, tout en logeant l'insert 5' dans son échancrure 6' de forme complémentaire,
- on a effectué un cycle d'autoclavage de l'ensemble de manière à obtenir le feuilletage définitif du vitrage feuilleté 1,
- puis on a emboîté manuellement dans l'espace délimité par l'échancrure 6 ledit insert 5 de telle sorte qu'il n'y ait pas de jeu.

En d'autres termes, le logement de l'insert 5' a été réalisé concomitamment à l'étape d'empilage des substrats 2, 3 et de la feuille 4 en PVB ; tandis que celui de l'insert 5 a été réalisé une fois le feuilletage définitif du vitrage feuilleté 1 effectué.

Afin de vérifier que le vitrage feuilleté 1 ainsi constitué est apte à supporter le champ de contraintes en compression induit par une pièce de liaison solidaire d'un mécanisme assurant sa mobilité verticale dans la portière d'un véhicule automobile, telle que celle décrite dans le brevet EP 694 669, on vient pincer, dans les zones où sont situés les inserts 5, 5', les faces externes des substrats 2, 3 avec la paire de plaques de cette même pièce dont le rapprochement mutuel est assuré par une vis sur laquelle on exerce différents couples de serrage respectivement de 6,5 ; 8.5 et 11 N/m, ce qui provoque des efforts de pincement de 120, 160 et 200 daN respectivement.

En outre, on a réalisé des tests en maintenant ces couples de serrage pendant 1000 heures à une température de l'ordre de 90°C. Dans tous les cas aucune casse du vitrage feuilleté 1 n'est apparue. De plus, l'épaisseur de chaque vitrage après le test est restée identique, au dixième de millimètre près, à celle d'avant le test.

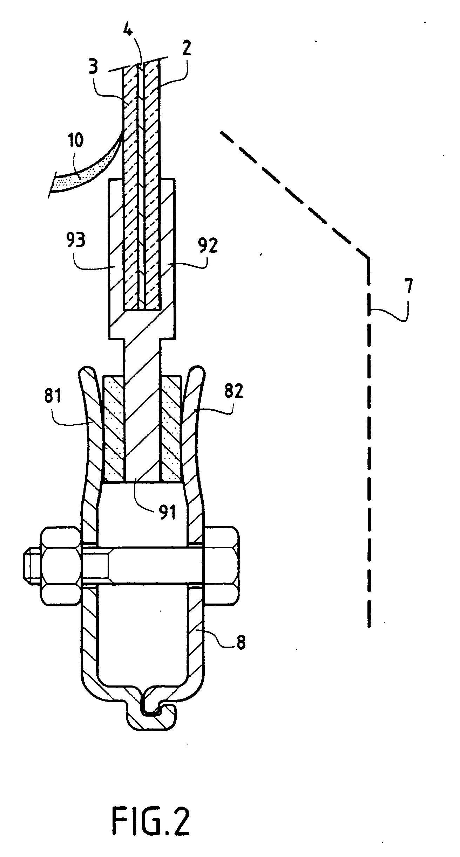

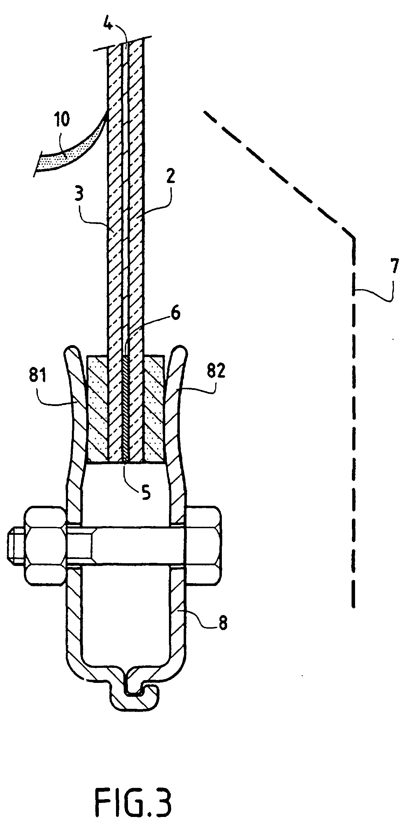

Sur les figures 2 et 3, on a représenté respectivement une vue en coupe transversale d'un vitrage feuilleté latéral coulissant dans la portière d'un véhicule automobile et assemblé par pincement avec le mécanisme de levage, selon l'état de l'art et selon l'invention.

On se réfère tout d'abord à la figure 2 sur laquelle on voit un vitrage feuilleté 1 comportant deux substrats en verre peu trempé 2, 3 monté par coulissement dans la portière 7 d'un véhicule automobile représenté en pointillé et dont la liaison avec le mécanisme de levage est assurée par pincement. Celui-ci est effectué à l'aide d'une pince 8 comportant une paire de plaques 81, 82 dont le serrage est assuré par une vis non représentée sur un manchon 91, de surface d'appui sensiblement identique à celle des plaques 81, 82. Ce manchon 91 appartient à une pièce 9 en matière plastique rigide prolongée par une partie terminale en forme de U dont les branches 92, 93 adhérent à la partie périphérique inférieure du vitrage feuilleté 1 au moyen d'une colle.

On se réfère maintenant à la figure 3 sur laquelle on voit le vitrage feuilleté 1 selon l'invention, tel que celui représenté aux figures 1a et 1b dont le montage est assuré pareillement à celui de la figure 2. La liaison avec le mécanisme de levage est également assurée par pincement avec la même pince 8, à ceci près, qu'elle ne s'effectue plus par intermédiaire du manchon 91 de la pièce 9 de la figure précédente mais directement sur les faces externes des substrats en verre peu trempé 2, 3 dans la zone où est situé l'insert dur 5 précédemment décrit.

L'avantage de la solution selon l'invention par rapport à celle proposée à la figure 2 est indéniable : outre un encombrement réduit, elle permet de s'affranchir de tout problème de collage et d'affleurement de pièce autre que le vitrage feuilleté 1 au niveau du joint 10 appelé « lécheur de vitres »

## Revendications

1. Vitrage feuilleté comportant au moins deux substrats transparents rigides assemblés par un intercalaire comprenant au moins une feuille de matière thermoplastique, notamment à base de polyvinylbutyral (PVB), ledit intercalaire présentant, dans sa partie marginale, au moins une échancrure sur au moins une partie de son épaisseur (e), **caractérisé en ce qu**'il comporte un insert logé dans ladite échancrure, et d'une dureté supérieure à celle de l'intercalaire et inférieure à la dureté minimale des deux substrats rigides.

2. Vitrage selon la revendication 1, **caractérisé en ce que** ledit intercalaire comprend au moins une feuille à base d'autre(s) polymère(s) organique(s), notamment du polyuréthane et/ou de l'éthylévinylacétate (EVA) et/ou du chlorure de polyvinyle (PVC) et/ou un polyester du type polyéthylènetéréphtalate (PET) et/ou du polycarbonate et/ou du polypropylène et/ou du polyéthylène et/ou du polyuréthacrylate.

3. Vitrage selon la revendication 1 ou 2, **caractérisé en ce qu**'il est apte à supporter un effort par unité de surface d'au moins 2 MPa, appliqué de part et d'autre des faces externes desdits substrats dans la zone où est situé l'insert.

4. Vitrage selon la revendication 3, **caractérisé en ce que** la surface dudit insert est au moins égale à celle sur laquelle s'exerce ledit effort.

5. Vitrage selon l'une des revendications précédentes, **caractérisé en ce que** ledit insert dur présente une dureté Shore D limitant le fluage à chaud de ladite feuille de matière thermoplastique, dans la zone où est situé l'insert.

6. Vitrage selon l'une quelconque des revendications précédentes, **caractérisé en ce que** lesdits substrats sont en verre peu trempé sur toute sur leur surface **et en ce que** ledit insert dur présente une dureté shore D comprise entre 70 et 90,avantageusement de l'ordre de 80.

7. Vitrage selon la revendication 6, **caractérisé en ce que** les substrats en verre ont une épaisseur comprise entre 1,5 et 2,1 mm.

8. Vitrage selon l'une quelconque des revendications précédentes, **caractérisé en ce que** ledit insert dur est en matière plastique injectée, moulée ou usinée, avantageusement chargé de fibres et/ou billes de verre.

9. Vitrage selon la revendication 8, **caractérisé en ce que** ledit insert dur est en polyamide ou en polybutylène téréphtalate (PBT).

10. Vitrage selon l'une quelconque des revendications précédentes, **caractérisé en ce que** ledit insert dur a une épaisseur égale à au moins 85 % de celle (e) de l'intercalaire.

11. Vitrage selon la revendication 9, **caractérisé en ce que** l'épaisseur de l'insert dur est comprise entre 0,65 et 0,76 mm.

12. Vitrage selon l'une quelconque des revendications précédentes, **caractérisé en ce que** la distance séparant le bord « libre» dudit insert du bord du substrat rigide assemblé qui en est le plus proche est inférieure à 1 mm.

13. Vitrage selon l'une quelconque des revendications précédentes, **caractérisé en ce que** ledit insert et ladite échancrure sont de formes complémentaires, de préférence permettant l'emboîtement.

14. Vitrage selon l'une quelconque des revendications précédentes, **caractérisé en ce qu**'il constitue un vitrage pour véhicule automobile, tel qu'un vitrage latéral mobile dans la carrosserie ou un pare-brise.

15. Vitrage feuilleté selon l'une quelconque des revendications 1 à 14 dont les faces externes desdits substrats sont pincées de part et d'autre par au moins une pièce dans la zone où est situé l'insert dur **caractérisé en ce qu**'il est apte à supporter le champ de contraintes en compression induit par ladite pièce.

16. Vitrage selon la revendication 15, **caractérisé en ce que** ladite pièce est une pièce de liaison solidaire d'un mécanisme assurant la mobilité dudit vitrage, en particulier un mécanisme de montée baisse d'un vitrage latéral mobile dans une carrosserie de véhicule automobile.

17. Vitrage selon la revendication 15 ou 16, **caractérisé en ce que** ladite pièce comporte une paire de plaques dont le rapprochement mutuel est assuré par au moins une vis de serrage.

18. Vitrage selon la revendication 17, **caractérisé en ce que** l'effort de pincement des faces externes des substrats exercé par la vis de serrage est d'au moins 120 daN.

19. Procédé de fabrication d'un vitrage feuilleté comportant deux substrats transparents rigides assemblés par un intercalaire qui comprend au moins une feuille de matière thermoplastique, notamment à base de polyvinylbutyral (PVB), **caractérise en ce qu**'on réalise, en outre, les étapes suivantes :
a/on réalise dans la partie marginale dudit intercalaire au moins une échancrure sur au moins une partie de son épaisseur (e)
b/ on loge dans ladite échancrure un insert d'une dureté supérieure à celle de l'intercalaire et inférieure à la dureté minimale des deux substrats rigides.

20. Procédé selon la revendication 19, **caractérisé en qu**'on réalise l'étape b/ pendant ou après avoir empilé en les ajustant le(s) substrat(s) et la (les) feuilles(s) de matière thermoplastique.

21. Procédé selon la revendication 19 ou 20, **caractérisé en ce qu**'on réalise l'étape b/ après avoir feuilleté le vitrage feuilleté de façon définitive par action d'une différence de pression et/ou de chaleur.

22. Procédé selon la revendication 21, **caractérisé en qu**'on réalise l'étape b/ en injectant une matière liquide mono ou bi-composante, de préférence polymérisable sans retrait.

## Patentansprüche

1. Verbundglasscheibe, welche mindestens zwei starre transparente Substrate enthält, die durch eine Zwischenschicht miteinander verbunden sind, die wenigstens eine Folie aus einem thermoplastischen Material, insbesondere auf der Basis von Polyvinylbutyral (PVB), umfasst und in ihrem Randbereich mindestens eine Aussparung über wenigstens einen Teil ihrer Dicke (e) aufweist, **dadurch gekennzeichnet, dass** sie einen in dieser Aussparung befindlichen Einsatz enthält, dessen Härte größer als die der Zwischenschicht und geringer als die Mindesthärte der zwei starren Substrate ist.

2. Verbundglasscheibe nach Anspruch 1, **dadurch gekennzeichnet, dass** die Zwischenschicht wenigstens eine Folie auf der Basis von einem oder mehreren anderen organischen Polymeren, insbesondere Polyurethan und/oder Ethylen-Vinylacetat (EVA) und/oder Polyvinylchlorid (PVC) und/oder Polyester vom Typ Polyethylenterephthalat (PET) und/oder Polycarbonat und/oder Polypropylen und/oder Polyethylen und/oder Polyacrylaturethan, umfasst.

3. Verbundglasscheibe nach Anspruch 1 oder 2, **dadurch gekennzeichnet, dass** sie in der Lage ist, eine Kraft pro Flächeneinheit von mindestens 2 MPa zu ertragen, die auf die beiden Außenseiten der Substrate in dem Bereich, in welchem sich der Einsatz befindet, ausgeübt wird.

4. Verbundglasscheibe nach Anspruch 3, **dadurch gekennzeichnet, dass** die Oberfläche des Einsatzes mindestens genauso groß wie die, auf welche die Kraft ausgeübt wird, ist.

5. Verbundglasscheibe nach einem der vorhergehenden Ansprüche, **dadurch gekennzeichnet, dass** der harte Einsatz eine Shore-Härte D besitzt, die das Warmkriechen der thermoplastischen Kunststofffolie in dem Bereich, in welchem sich der Einsatz befindet, begrenzt.

6. Verbundglasscheibe nach einem der vorhergehenden Ansprüche, **dadurch gekennzeichnet, dass** die Substrate aus einem Glas bestehen, das über seine gesamte Fläche schwach vorgespannt ist, **und dass** die Shore-Härte D des harten Einsatzes 70 bis 90 und vorteilhafterweise etwa 80 beträgt.

7. Verbundglasscheibe nach Anspruch 6, **dadurch gekennzeichnet, dass** die Dicke der Glassubstrate 1,5 bis 2,1 mm beträgt.

8. Verbundglasscheibe nach einem der vorhergehenden Ansprüche, **dadurch gekennzeichnet, dass** der harte Einsatz aus spritzgegossenem, geformtem oder spanend bearbeitetem Kunststoff besteht, der vorteilhafterweise mit Glasfasern und/oder Glaskugeln gefüllt ist.

9. Verbundglasscheibe nach Anspruch 8, **dadurch gekennzeichnet, dass** der harte Einsatz aus Polyamid oder Polybutylenterephthalat (PBT) besteht.

10. Verbundglasscheibe nach einem der vorhergehenden Ansprüche, **dadurch gekennzeichnet, dass** die Dicke des harten Einsatzes mindestens 85 % derjenigen (e) der Zwischenschicht beträgt.

11. Verbundglasscheibe nach Anspruch 9, **dadurch gekennzeichnet, dass** die Dicke des harten Einsatzes 0,65 bis 0,76 mm beträgt.

12. Verbundglasscheibe nach einem der vorhergehenden Ansprüche, **dadurch gekennzeichnet, dass** der Abstand, der den "freien" Rand des Einsatzes vom Rand des assemblierten starren Substrats trennt, das sich zu ihm am nächsten befindet, weniger als 1 mm beträgt.

13. Verbundglasscheibe nach einem der vorhergehenden Ansprüche, **dadurch gekennzeichnet, dass** Einsatz und Aussparung komplementäre Formen haben, die vorzugsweise ein Einfügen erlauben.

14. Verbundglasscheibe nach einem der vorhergehenden Ansprüche, **dadurch gekennzeichnet, dass** sie ein Autoglas wie eine in der Karosserie bewegliche Seitenscheibe oder eine Frontscheibe bildet.

15. Verbundglasscheibe nach einem der Ansprüche 1 bis 14, deren Außenseiten der Substrate auf beiden Seiten von mindestens einem Bauteil in dem Bereich festgeklemmt werden, in welchem sich der harte Einsatz befindet, **dadurch gekennzeichnet, dass** sie in der Lage ist, das von diesem Bauteil erzeugte Druckspannungsfeld zu ertragen.

16. Verbundglasscheibe nach Anspruch 15, **dadurch gekennzeichnet, dass** das Bauteil ein Bauteil für die feste Verbindung mit einem Mechanismus, der die Beweglichkeit der Verbundglasscheibe sicherstellt, insbesondere mit einem Hebemechanismus einer in einer Autokarosserie beweglichen Seitenscheibe, ist.

17. Verbundglasscheibe nach Anspruch 15 oder 16, **dadurch gekennzeichnet, dass** das Bauteil ein Paar Platten umfasst, deren gegenseitige Annäherung von mindestens einer Spannschraube sichergestellt wird.

18. Verbundglasscheibe nach Anspruch 17, **dadurch gekennzeichnet, dass** die Klemmkraft auf die Außenseiten der Substrate, die von der Spannschraube ausgeübt wird, mindestens 120 daN beträgt.

19. Verfahren zur Herstellung einer Verbundglasscheibe, die zwei starre transparente Substrate enthält, die durch eine Zwischenschicht miteinander verbunden sind, die wenigstens eine Folie aus einem thermoplastischen Material, insbesondere auf der Basis von Polyvinylbutyral (PVB), umfasst, **dadurch gekennzeichnet, dass** außerdem die Stufen:
a) Herstellen mindestens einer Aussparung im Randbereich der Zwischenschicht über wenigstens einen Teil von deren Dicke (e) und
b) Anbringen eines Einsatzes, dessen Härte größer als die der Zwischenschicht und geringer als die Mindesthärte der zwei starren Substrate ist, in dieser Aussparung durchgeführt werden.

20. Verfahren nach Anspruch 19, **dadurch gekennzeichnet, dass** die Stufe b) während oder nach dem Aufeinander-Anordnen des/der Subtrate/s und der thermoplastischen Kunststofffolie/n, wobei sie einander angepasst werden, durchgeführt wird.

21. Verfahren nach Anspruch 19 oder 20, **dadurch gekennzeichnet, dass** die Stufe b) durchgeführt wird, nachdem die Verbundglasscheibe endgültig durch die Einwirkung einer Druck- und/oder Wärmedifferenz assembliert worden ist.

22. Verfahren nach Anspruch 21, **dadurch gekennzeichnet, dass** die Stufe b) durchgeführt wird, indem ein vorzugsweise schwindungsfrei polymerisierbares, flüssiges Ein- oder Zweikomponentenmaterial spritzgegossen wird.

## Claims

1. Laminated glazing comprising at least two rigid transparent substrates connected by a divider comprising at least one sheet of thermoplastic material, in particular based on polyvinyl butyral (PVB), the said divider having, in its marginal part, at least one recess over at least part of its thickness (e), **characterised in that** it comprises an insert housed in the said recess, and with a hardness greater than that of the divider and less than the minimum hardness of the two rigid substrates.

2. Glazing according to Claim 1, **characterised in that** said divider comprises at least one sheet based on another organic polymer or polymers, in particular polyurethane and/or ethyl vinyl acetate (EVA) and/or polyvinyl chloride (PVC) and/or a polyester of the polyethylene terephthalate (PET) type and/or polycarbonate and/or polypropylene and/or polyethylene and/or polyurethacrylate.

3. Glazing according to Claim 1 or 2, **characterised in that** it is able to support a force per unit surface of at least 2 MPa, applied on each side of the external faces of the said substrates in the area where the insert is situated.

4. Glazing according to Claim 3, **characterised in that** the surface area of the said insert is at least equal to that on which the said force is exerted.

5. Glazing according to one of the preceding claims, **characterised in that** the said hard insert has a Shore D hardness limiting the hot creep of the said sheet of thermoplastic material, in the area where the insert is situated.

6. Glazing according to any one of the preceding claims, **characterised in that** the said substrates are made from glass which is little toughened over their entire surface and **in that** the said hard insert has a Shore D hardness of between 70 and 90, advantageously around 80.

7. Glazing according to Claim 6, **characterised in that** the glass substrates have a thickness of between 1.5 and 2.1 mm.

8. Glazing according to any one of the preceding claims, **characterised in that** the said hard insert is made from injected, moulded or machined plastics material, advantageously containing fibres and/or glass balls.

9. Glazing according to Claim 8, **characterised in that** the said hard insert is made from polyamide or polybutylene terephthalate (PBT).

10. Glazing according to any one of the preceding claims, **characterised in that** the said hard insert has a thickness equal to at least 85% of that of the divider.

11. Glazing according to Claim 9, **characterised in that** the thickness of the hard insert is between 0.65 and 0.76 mm.

12. Glazing according to any one of the preceding claims, **characterised in that** the distance separating the "free" edge of the said insert from the edge of the connected rigid substrate which is closest to it is less than 1 mm.

13. Glazing according to any one of the preceding claims, **characterised in that** the said insert and the said recess have complementary shapes, preferably allowing fitting together.

14. Glazing according to any one of the preceding claims, **characterised in that** it constitutes glazing for a motor vehicle, such as a side glazing able to move in the bodywork or a windscreen.

15. Laminated glazing according to any one of Claims 1 to 14, where the external faces of the said substrates are gripped on each side by at least one piece in the area where the hard insert is situated, **characterised in that** it is able to withstand the field of compressive stresses caused in the said piece.

16. Glazing according to Claim 15, **characterised in that** the said piece is a connecting piece fixed to a mechanism ensuring the mobility of the said glazing, in particular a mechanism for raising and lowering a side glazing able to move in motor vehicle bodywork.

17. Glazing according to Claim 15 or 16, **characterised in that** the said piece comprises a pair of plates whose mutual bringing together is provided by at least one clamping screw.

18. Glazing according to Claim 17, **characterised in that** the gripping force of the external faces of the substrates exerted by the clamping screw is at least 120 daN.

19. Method of manufacturing a laminated glazing comprising two rigid transparent substrates connected by a divider which comprises at least one sheet of thermoplastic material, in particular based on polyvinyl butyral (PVB), **characterised in that** the following steps are performed in addition:
a) there is produced, in the marginal part of the said divider, at least one recess over at least part of its thickness (e)
b) there is housed in the said recess an insert with a hardness greater than that of the divider and less than the minimum hardness of the two rigid substrates.

20. Method according to Claim 19, **characterised in that** step b) is performed during or after having stacked, whilst adjusting them, the substrate or substrates and the sheet or sheets of thermoplastic material.

21. Method according to Claim 19 or 20, **characterised in that** step b) is performed after having laminated the laminated glazing definitively by the action of a difference in pressure and/or heat.

22. Method according to Claim 21, **characterised in that** step b) is performed by injecting a single or dual-component liquid material, preferably polymerisable without shrinkage.
